# EUROPÄISCHE PATENTSCHRIFT

(11) **EP 2 990 434 B1**
(45) Veröffentlichungstag und Bekanntmachung des Hinweises auf die Patenterteilung: **18.04.2018**
(21) Anmeldenummer: 15172556.1
(22) Anmeldetag: 17.06.2015
(51) Int. Cl.: C08J 5/12, D04B 1/16

(54) **SITZBEZUG MIT EINEM ABSTANDSTEXTIL, SITZ DAMIT UND VERFAHREN ZUM HERSTELLEN EINES SITZBEZUGS**
SEAT COVER COMPRISING A SPACER FABRIC, SEAT PROVIDED WITH THE SAME AND METHOD FOR PRODUCING A SEAT COVER
HOUSSE DE SIEGE AVEC TEXTILE D'ESPACEMENT, SIEGE EN ETANT EQUIPE ET PROCEDE DE FABRICATION D'UNE HOUSSE DE SIEGE

(30) Priorität: 17.06.2014 DE 102014008626
(43) Veröffentlichungstag der Anmeldung: 02.03.2016
(73) Patentinhaber: Adient Luxembourg Holding S.à r.l., 1855 Luxembourg (LU)
(72) Erfinder: Reinbach, Ingo, 52249 Eschweiler (DE); Münchmeyer, Ann-Sophie, 50733 Köln (DE); Müller, Peter Gerd, 50667 Köln (DE); Erdmenger, Tina, 6043 HW Roermond (NL)
(74) Vertreter: Jabbusch, Matthias

(56) Entgegenhaltungen:
- EP-A1- 1 388 310
- DE-A1- 2 800 606
- DE-A1- 4 214 389
- US-A1- 2002 016 119
- US-A1- 2005 039 346
- US-B1- 6 755 052

## Beschreibung

Die Erfindung betrifft einen Sitzbezug mit einem Bezugspolster sowie einen Sitz, dessen Polster zumindest teilweise von dem erfindungsgemäßen Sitzbezug bedeckt ist. Schließlich betrifft die Erfindung ein Verfahren zum Herstellen eines Sitzbezugs, bei welchem ein Dekorelement auf das Bezugspolster laminiert wird.

Bei der Herstellung herkömmlicher Sitzbezüge wird das Dekormaterial mittels Klebstoff oder mittels eines selbstklebenden Vlieses, einer selbstklebenden Folie oder eines selbstklebenden Netzes auf das Bezugspolster mit dem Abstandstextil laminiert. Der Klebstoff oder Haftvermittler wird mittels Hitze aktiviert. Die Hitze kann durch Hochfrequenz direkt im Klebstoff erzeugt werden. Eine alternative bekannte Möglichkeit der Laminierung ist die Flammkaschierung.

US 2002/0016119 A1 und US 6,755,052 B1 offenbaren jeweils ein Abstandstextil. Zumindest bei dem aus US 6,755,052 B1 bekannten Abstandstextil ist in einer Rückseiteneinlage ein erstes Polyestergarn vorgesehen. Eine Vorderseitenlage des Abstandstextils weist ein Spandexgarn auf, welches ein Polyesterurethan ist.

Aus DE 4214389 A1 ist ein Schichtaufbau mit mehreren Schichten und ein Verfahren zu dessen Herstellung bekannt. Die Schichten weisen eine Dekorschicht, eine Abstandsschicht, wie ein Abstandsgewebe und eine damit verbundene Trägerschicht auf. Dabei sind die Schichten jeweils aus einem gleichen oder gleichartigen thermoformbaren und miteinander verschmelzbaren Kunststoff, wie beispielsweise Polyester aufgebaut oder enthalten diesen. Die Schichten sind kleberfrei, mechanisch und/oder chemisch-physikalisch miteinander verbunden.

Der Erfindung liegt die Aufgabe zugrunde, eine vorteilhafte Alternativmöglichkeit der Laminierung eines Dekormaterials auf ein Bezugspolster bereitzustellen.

Die Erfindung löst diese Aufgabe mit einem Verfahren nach Anspruch 1, mit einem Sitzbezug nach Anspruch 13 und mit einem Sitz nach Anspruch 14. Bei einem Verfahren zum Herstellen eines Sitzbezuges, wobei der Sitzbezug ein Bezugspolster und ein Dekormaterial aufweist, wobei das Bezugspolster eine Oberware, eine darunter angeordnete Polsterlage und eine darunter angeordnete Unterware bereitstellt und wobei der Sitzbezug ein Abstandstextil mit einer Vorderseitenlage, einer Rückseitenlage und einer zwischen der Vorderseitenlage und der Rückseitenlage angeordneten und die Vorderseitenlage von der Rückseitenlage auf Abstand haltenden Abstandslage aufweist, wobei das Abstandstextil zumindest mit der Vorderseitenlage die Oberware und mit zumindest der Abstandslage die Polsterlage bereitstellt und wobei zumindest die Abstandslage und die Rückseitenlage ein erstes Polyestergarn aufweisen, ist erfindungsgemäß vorgesehen, dass das Dekormaterial mittels Hochfrequenzschweißen in einem Hochfrequenzfeld auf das Bezugspolster laminiert wird, wobei in dem Hochfrequenzfeld dadurch, dass die Vorderseitenlage wenigstens ein weiteres Garn aufweist, welches gegenüber dem ersten Polyestergarn eine bessere Einigung zur dielektrischen Erwärmung aufweist, in der Vorderseitenlage ausreichend Hitze entsteht, um das Dekormaterial auf die Vorderseitenlage des Abstandstextils zu schweißen.

Bei dem erfindungsgemäßen Verfahren zum Herstellen eines Sitzbezuges wird das Dekormaterial mittels Hochfrequenzschweißen direkt auf das erfindungsgemäße Bezugspolster laminiert, insbesondere ohne dass hierfür ein Kleber oder Haftvermittler appliziert werden müsste. Dabei wird ohne Schweißzusatz eine stoffschlüssige Verbindung zwischen dem Bezugspolster, insbesondere der Oberware, und dem Dekormaterial hergestellt. Damit wird der erfindungsgemäße Sitzbezug erhalten.

Die Erfindung wird ermöglicht durch die spezielle Ausgestaltung des Abstandstextils im Bezugspolster. Dabei ist die Eignung zur dielektrischen Erwärmung durch den Imaginärteil der komplexen Permittivität des Garns bei vorgegebener Frequenz und vorgegebener Temperatur gegeben. Die Permittivität ist dabei ein Maß für die feldschwächenden Effekte der dielektrischen Polarisation des jeweiligen Mediums. Die Polarisationsfähigkeit des Garns wird durch den Realteil der komplexen Permittivität, insbesondere die Dielektrizitätskonstante, vorgegeben. Vergleichbar mit dem Funktionsprinzip einer Mikrowelle entsteht in einem Hochfrequenzfeld in der Vorderseitenlage daher ausreichend Hitze, um ohne Einsatz von Klebstoffen oder Haftvermittlern ein Dekormaterial auf die Vorderseitenlage des Abstandstextils zu schweißen oder in anderen Worten zu laminieren. Mit dem bekannten ersten Polyestergarn, welches bei bekannten Abstandstextilien auch in der Vorderseitenlage verwendet wird, wird dagegen keine ausreichende Hitze für den Schweißvorgang entwickelt.

Beim Schweißvorgang mit dem Abstandstextil wird eine stoffschlüssige Verbindung zwischen dem Abstandstextil, insbesondere der Vorderseitenlage, und dem Dekormaterial hergestellt. Die Verbindung erfolgt ausschließlich durch diesen Stoffschluss. Insbesondere wird kein Schweißzusatz verwendet.

Das wenigstens eine weitere Garn umfasst vorzugsweise ein zweites Polyestergarn, welches gegenüber dem ersten Polyestergarn eine bessere Eignung zur dielektrischen Erwärmung aufweist. Insbesondere ist das zweite Garn das zweite Polyestergarn. Die Eignung des zweiten Polyestergarns zur dielektrischen Erwärmung kann dabei gegenüber dem ersten Polyestergarn auf verschiedene Weise verbessert sein. Besonders bevorzugt weist das zweite Polyestergarn gegenüber dem ersten Polyestergarn eine, insbesondere in der Polymerkette, modifizierte Polyesterstruktur auf. Insbesondere ist eine Polyesterstruktur vorgesehen, wie in DE 196 10 481 A1 oder DE 600 12 014 T2 beschrieben. Der Offenbarungsgehalt der DE 196 10 481 A1 sowie der DE 600 12 014 T2 in Bezug auf Polyesterstrukturen wird dabei vollständig in die vorliegende Anmeldung einbezogen. Jede dort beschriebene modifizierte Polyesterstruktur, welche eine gegenüber dem ersten Polyestergarn verbesserte dielektrische Erwärmung ermöglicht, kann daher Teil der vorliegenden Erfindung sein.

Vorteilhaft für die Verbesserung der dielektrischen Erwärmung ist es auch, wenn das zweite Polyestergarn polare funktionelle Gruppen aufweist.

Alternativ oder zusätzlich kann das wenigstens eine weitere Garn ein Alternativgarn umfassen, welches gegenüber dem ersten Polyestergarn eine bessere Eignung zur dielektrischen Erwärmung aufweist. Das Alternativgarn umfasst dabei vorzugsweise eine, mehrere oder alle der folgenden Fasern: Fasern aus Polyamid, aus Acryl, insbesondere Polymethylmethacrylat (PMMA) oder Polyacrylsäure (PAA), aus Polyphenylensulfid, aus thermoplastischem Polyurethan, aus Polyvinylchlorid, aus Ethylenvinylalkohol, aus Polyvinylidenfluorid, aus Polyimid und/oder aus einem Copolymer der vorstehend genannten Polymere.

Das Alternativgarn umfasst gemäß einer weiteren Ausführungsform alternativ oder zusätzlich zu den vorstehend genannten Fasern wenigstens eine Bikomponentenfaser. Der Einsatz der Bikomponentenfaser ermöglicht zumindest in einem Teil der Bikomponentenfaser eine verbesserte dielektrische Erwärmung. Die Bikomponentenfaser weist vorzugsweise eine Kern-Mantel-Struktur auf, bei der beispielsweise der Mantel eine verbesserte dielektrische Erwärmung ermöglicht.

Alternativ oder zusätzlich ist die Eignung des weiteren Garns, insbesondere des zweiten Polyestergarns, zur dielektrischen Erwärmung dadurch verbessert, dass wenigstens ein Zusatz, insbesondere wenigstens ein Additiv, zugegeben ist, welches gegenüber dem ersten Polyestergarn stärkere oder höhere dielektrische Eigenschaften aufweist. Derartige Zusätze umfassen vorzugsweise eines, mehrere oder alle der nachfolgend genannten Additive: Additive zur Verbesserung der Schlagzähigkeit, Weichmacher und anorganische Füllstoffe, insbesondere Bariumtitanoxid, Titandioxid, Aluminiumoxid, Zirkonia, Russ oder Aktivkohle, Siliciumcarbid und/oder metallische Salze und/oder Additive wie in WO 99/47621 A1 und/oder in EP 1 068 276 B1 und/oder DE 699 22 357 T2 beschrieben. Der Offenbarungsgehalt der WO 99/47621 A1, der EP 1 068 276 B1 und der DE 699 22 357 T2 in Bezug auf Additive wird dabei vollständig in die vorliegende Anmeldung einbezogen. Jedes dort beschriebene Additiv, welches eine gegenüber dem ersten Polyestergarn verbesserte dielektrische Erwärmung ermöglicht, kann daher Teil der vorliegenden Erfindung sein.

Das zweite Garn ist besonders bevorzugt ausschließlich in der Oberseitenlage eingearbeitet. Ansonsten kann das Abstandstextil auf bekannte Weise ausgebildet sein. Insbesondere weist die Abstandslage Polfäden auf, welche vorzugsweise senkrecht oder im Wesentlichen senkrecht, insbesondere mit weniger als 40° Abweichung von der Senkrechten, zur Vorderseitenlage sowie zur Rückseitenlage ausgerichtet sind. Das Abstandstextil ist besonders bevorzugt ein Abstandsgestrick. Alternativ kann das Abstandstextil jedoch auch als Abstandsgewirke oder Abstandsgewebe ausgebildet sein.

Das Bezugspolster mit dem Abstandstextil stellt die Oberware, die darunter angeordnete Polsterlage und die darunter angeordnete Unterware bereit. Die Polsterlage ist einerseits mit der Oberware und andererseits mit der Unterware verbunden. Dabei stellt das Abstandstextil zumindest mit der Vorderseitenlage die Oberware und mit zumindest der Abstandslage die Polsterlage bereit. Die Rückseitenlage des Abstandstextils kann Teil der Abstandslage des Bezugspolsters sein, wobei in diesem Fall das Abstandstextil mit der Unterware verbunden ist, die somit separat vom Abstandstextil ausgebildet ist. Alternativ stellt auch das Abstandstextil die Unterware bereit, wobei in diesem Fall mit der Rückseitenlage des Abstandstextils die Unterware bereitgestellt wird.

Das Bezugspolster ist vorzugsweise ein Sitzbezugspolster, welches Teil eines erfindungsgemäßen Sitzbezuges für einen Sitz in einem Fahrzeug ist. Der Sitzbezug mit dem Bezugspolster weist darüber hinaus das auf den Sitzbezug aufkaschierte Dekormaterial auf. Das Dekormaterial kann beispielsweise ein Textil oder Leder sein und ist erfindungsgemäß mittels Hochfrequenzschweißen auf das Bezugspolster auflaminiert.

Ein Sitz mit dem erfindungsgemäßen Sitzbezug weist ein Polster auf, welches zumindest teilweise von dem Sitzbezug abgedeckt wird. Das Polster kann beispielsweise aus Schaumstoff bestehen.

Weitere Ausführungsformen ergeben sich in Kombination mit dem Offenbarungsgehalt der DE 196 10 481 A1 und der DE 600 12 014 T2, insbesondere in Bezug auf eine in der Polymerkette modifizierte Polyesterstruktur, sowie in Kombination mit dem Offenbarungsgehalt der WO 99/47621 A1, der EP 1 068 276 B1 und der DE 699 22 357 T2, insbesondere in Bezug auf Additive, und aus einem Ausführungsbeispiel der Erfindung, welches in der Zeichnung dargestellt und nachfolgend beschrieben ist.

In der Zeichnung zeigt
- Fig. 1:: ein Abstandstextil in schematischer, perspektivischer Ansicht gemäß einem Ausführungsbeispiel der Erfindung, und
- Fig. 2:: einen Sitzbezug, der ein Bezugspolster mit dem Abstandstextil von Fig. 1 aufweist und über einem Polster eines Sitzes angeordnet ist, in schematischer Seitenschnittansicht.

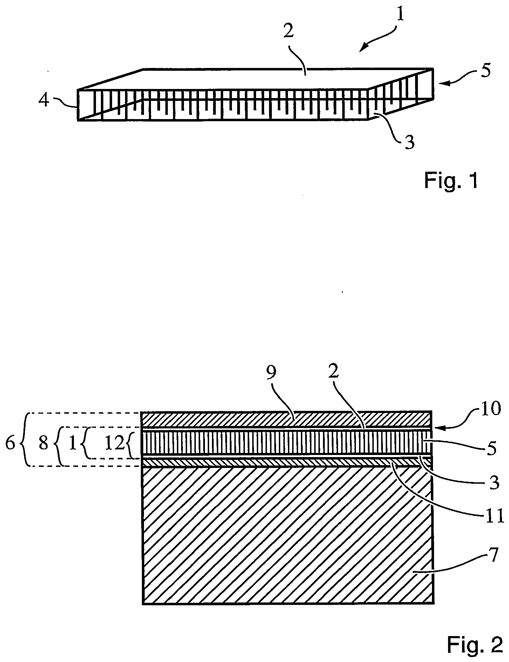

Figur 1 zeigt ein Abstandstextil 1, welches beispielswiese als Abstandsgestrick ausgebildet ist. Zwischen einer Vorderseitenlage 2 und einer Rückseitenlage 3 sind zahlreiche Polfäden 4 angeordnet, von denen nur einer beispielhaft bezeichnet ist. Die Polfäden 4 erstrecken sich senkrecht von der Vorderseitenlage 2 zur Rückseitenlage 3 und halten die Vorderseitenlage 2 und die Rückseitenlage 3 voneinander beabstandet. Damit bilden die Polfäden 4 zwischen der Vorderseitenlage 2 und der Rückseitenlage 3 eine Abstandslage 5 aus. Sowohl in der Rückseitenlage 3 als auch in der Abstandslage 5 ist ein erstes Polyestergarn verarbeitet. Das erste Polyestergarn kann auch teilweise in der Vorderseitenlage 2 verarbeitet sein.

Das Abstandstextil 1 weist eine Modifizierung des Oberflächenmaterials in der Vorderseitenlage 2 auf. Insbesondere enthält die Vorderseitenlage 2 ein weiteres Garn, welches insbesondere in zweites Polyestergarn ist. Das zweite Polyestergarn ist ein gegenüber dem ersten Polyestergarn modifiziertes Polyestergarn. Das zweite Polyestergarn ist dahingehend modifiziert, dass dieses zweite Polyestergarn eine bessere Eignung zur dielektrischen Erwärmung aufweist als das erste Polyestergarn. Insbesondere erwärmt sich das zweite Polyestergarn stärker als das erste Polyestergarn, wenn es einer definierten Hochfrequenz bei einer definierten Temperatur ausgesetzt wird. Daher kann sich die gesamte Vorderseitenlage 2 des Abstandstextils 1 so stark erwärmen, dass das Abstandstextil 1 zum Hochfrequenzschweißen an der Vorderseitenlage 2 geeignet ist. Bei ausschließlicher Verwendung polyesterbasierter Garne oder Polymere, insbesondere bei Verzicht auf die Zusetzung alternativer Garne oder Polymere, ist ein vollständiges Recycling des Abstandstextils 1 auf einfache Weise möglich. Alternativ kann jedoch an Stelle des zweiten Polyestergarns ein anderes Garn mit gegenüber dem ersten Polyestergarn höheren dielektrischen Eigenschaften verwendet werden, beispielsweise ein Polyamidgarn. Auch ist die Zusetzung von Additiven möglich, um die dielektrischen Eigenschaften zu verbessern.

Dank der hervorragenden Eignung des Abstandstextils 1 zur dielektrischen Erwärmung und somit zum Hochfrequenzschweißen kann auf Klebstoffe oder Haftvermittler verzichtet werden, wenn das Abstandstextil 1 an seiner Vorderseitenlage 2 erfindungsgemäß mit einem in Fig. 1 nicht dargestellten Dekormaterial verbunden werden soll, um einen hier ebenfalls nicht dargestellten Sitzbezug herzustellen.

Ein derartiger Sitzbezug ist in Figur 2 mit dem Bezugszeichen 6 bezeichnet und dort schematisch zusammen mit einem Polster 7 dargestellt. Das Polster 7 ist von dem Sitzbezug 6 überdeckt. Der Sitzbezug 6 und das Polster 7 sind vorzugsweise Teil eines Sitzes, insbesondere Autositzes. Das Polster 7 ist beispielsweise ein bekanntes Schaumpolster. Der Sitzbezug 6 wird von einem Bezugspolster 8 und einem Dekormaterial 9 gebildet, welches mittels Hochfrequenzschweißen auf das Bezugspolster 8 laminiert ist. Das Dekormaterial 9 ist beispielsweise ein Textil oder Leder.

Das Bezugspolster 8 stellt eine Oberware 10, eine Unterware 11 und eine zwischen der Oberware 10 und der Unterware 11 angeordnete Polsterlage 12 bereit. Im gezeigten Ausführungsbeispiel wird das Bezugspolster 8 aus dem Abstandstextil 1 und der rückseitig damit verbundenen Unterware 11 gebildet. Die Vorderseitenlage 2 des Abstandstextils 1 stellt somit zugleich die Oberware 10 des Bezugspolsters 8 bereit. Die Rückseitenlage 3 und die Abstandslage 5 des Abstandstextils 1 bilden zusammen die Polsterlage 12 des Bezugspolsters 8 aus.

In Alternative zum dargestellten Ausführungsbeispiel kann jedoch auf die separate Unterware 11 verzichtet werden, so dass die Rückseitenlage 3 des Abstandstextils 1 die Unterware 11 ausbildet und die Polsterlage 12 des Bezugspolsters 8 durch die Abstandslage 5 des Abstandstextils 1 gegeben ist. Auch ist es möglich, das Abstandstextil 1 als eine abweichend zum Ausführungsbeispiel ausgestaltete Polsterlage einzusetzen, wobei nicht nur die Unterware 11, sondern auch die Oberware 10 separat davon vorgesehen ist.

Alle in der vorstehenden Beschreibung genannten Merkmale sind in einer beliebigen Auswahl mit den Merkmalen des unabhängigen Anspruchs kombinierbar. Die Offenbarung der Erfindung ist somit nicht auf die beschriebenen oder beanspruchten Merkmalskombinationen beschränkt, vielmehr sind alle im Rahmen der Erfindung sinnvollen Merkmalskombinationen als offenbart zu betrachten.

## Patentansprüche

1. Verfahren zum Herstellen eines Sitzbezuges (6), wobei der Sitzbezug (6) ein Bezugspolster (8) und ein Dekormaterial (9) aufweist, wobei das Bezugspolster (8) eine Oberware (10), eine darunter angeordnete Polsterlage (12) und eine darunter angeordnete Unterware (11) bereitstellt und wobei der Sitzbezug (6) ein Abstandstextil (1) mit einer Vorderseitenlage (2), einer Rückseitenlage (3) und einer zwischen der Vorderseitenlage (2) und der Rückseitenlage (3) angeordneten und die Vorderseitenlage (2) von der Rückseitenlage (3) auf Abstand haltenden Abstandslage (5) aufweist, wobei das Abstandstextil (1) zumindest mit der Vorderseitenlage (2) die Oberware (10) und mit zumindest der Abstandslage (5) die Polsterlage (12) bereitstellt und wobei zumindest die Abstandslage (5) und die Rückseitenlage (3) ein erstes Polyestergarn aufweisen,
**dadurch gekennzeichnet,**
**dass** das Dekormaterial (9) mittels Hochfrequenzschweißen in einem Hochfrequenzfeld auf das Bezugspolster (8) laminiert wird, wobei in dem Hochfrequenzfeld dadurch, dass die Vorderseitenlage (2) wenigstens ein weiteres Garn aufweist, welches gegenüber dem ersten Polyestergarn eine bessere Eignung zur dielektrischen Erwärmung aufweist, in der Vorderseitenlage (2) ausreichend Hitze entsteht, um das Dekormaterial (9) auf die Vorderseitenlage (2) des Abstandstextils (1) zu schweißen.

2. Verfahren nach Anspruch 1, **dadurch gekennzeichnet, dass** beim Schweißen des Dekormaterials (9) auf die Vorderseitenlage (2) des Abstandstextils eine stoffschlüssige Verbindung zwischen der Vorderseitenlage (2) und dem Dekormaterial (9) hergestellt wird.

3. Verfahren nach einem der Ansprüche 1 und 2, **dadurch gekennzeichnet, dass** das wenigstens eine weitere Garn ein zweites Polyestergarn umfasst, welches gegenüber dem ersten Polyestergarn eine bessere Eignung zur dielektrischen Erwärmung aufweist.

4. Verfahren nach Anspruch 3, **dadurch gekennzeichnet, dass** die Eignung des zweiten Polyestergarns zur dielektrischen Erwärmung durch eine gegenüber dem ersten Polyestergarn, insbesondere in der Polymerkette, modifizierte Polyesterstruktur verbessert ist.

5. Verfahren nach Anspruch 4, **dadurch gekennzeichnet, dass** das zweite Polyestergarn polare funktionelle Gruppen zur Verbesserung der dielektrischen Erwärmung aufweist.

6. Verfahren nach einem der Ansprüche 4 und 5, **dadurch gekennzeichnet, dass** das zweite Polyestergarn Monomere zur Verbesserung der dielektrischen Erwärmung aufweist.

7. Verfahren nach einem der Ansprüche 1 bis 6, **dadurch gekennzeichnet, dass** das wenigstens eine weitere Garn ein Alternativgarn umfasst, welches gegenüber dem ersten Polyestergarn eine bessere Eignung zur dielektrischen Erwärmung aufweist.

8. Verfahren nach Anspruch 7, **dadurch gekennzeichnet, dass** das Alternativgarn eine, mehrere oder alle der folgenden Fasern umfasst: Fasern aus Polyamid, aus Acryl, insbesondere Polymethylmethacrylat (PMMA) oder Polyacrylsäure (PAA), aus Polyphenylensulfid, aus thermoplastischem Polyurethan, aus Polyvinylchlorid, aus Ethylenvinylalkohol, aus Polyvinylidenfluorid, aus Polyimid und/oder aus einem Copolymer des Polyimids.

9. Verfahren nach einem der Ansprüche 7 und 8, **dadurch gekennzeichnet, dass** das Alternativgarn wenigstens eine Bikomponentenfaser umfasst.

10. Verfahren nach einem der vorherigen Ansprüche, **dadurch gekennzeichnet, dass** die Eignung des weiteren Garns zur dielektrischen Erwärmung durch wenigstens einen Zusatz, insbesondere wenigstens ein Additiv, mit gegenüber dem ersten Polyestergarn höheren dielektrische Eigenschaften, insbesondere größerer Dielektrizität, verbessert ist.

11. Verfahren nach Anspruch 10, **dadurch gekennzeichnet, dass** der wenigstens eine Zusatz, eines, mehrere oder alle der nachfolgend genannten Additive umfasst: Additive zur Verbesserung der Schlagzähigkeit, Weichmacher und anorganische Füllstoffe, insbesondere Bariumtitanoxid, Titandioxid, Aluminiumoxid, Zirkonia, Russ oder Aktivkohle, Siliziumcarbid.

12. Verfahren nach einem der vorherigen Ansprüche, **dadurch gekennzeichnet, dass** das weitere Garn ausschließlich in der Oberseitenlage eingearbeitet ist.

13. Sitzbezug (6), hergestellt mit einem Verfahren nach einem der Ansprüche 1 bis 9 oder 12.

14. Sitz, insbesondere Fahrzeugsitz, mit einem Polster (7) und einem das Polster (7) zumindest teilweise bedeckenden Sitzbezug (6) nach Anspruch 13.

## Claims

1. Method for producing a seat cover (6), wherein the seat cover (6) has a cover pad (8) and a decorative material (9), wherein the cover pad (8) consists of an upper fabric (10), a padding layer (12) arranged below the upper fabric and a lower fabric (11) arranged below the padding layer (12), and wherein the seat cover (6) has a spacer fabric (1) with a front layer (2), a back layer (3) and a spacer layer (5) arranged between the front layer (2) and the back layer (3) and separating the front layer (2) from the back layer (3), wherein the spacer fabric (1) forms the upper fabric (10) at least with the front layer (2) and forms the padding layer (12) at least with the spacer fabric (5), and wherein at least the spacer layer (5) and the back layer (3) include a first polyester yarn,
**characterized in that**
the decorative material (9) is laminated onto the cover pad (8) in a high frequency field, wherein the front layer (2) contains at least one further yarn which is more suitable for dielectric heating than the first polyester yarn, thereby enabling enough heat to be generated in the front layer (2) to enable the decorative material (9) to be welded onto the front layer (2) of the spacer fabric (1) in the high frequency field.

2. Method according to Claim 1, **characterized in that** when the decorative material is welded (9) to the front layer (2) of the spacer fabric a substance-to-substance bond is created between the front layer (2) and the decorative material (9).

3. Method according to either of Claims 1 or 2, **characterized in that** the at least one further yarn comprises a second polyester yarn which is more suitable for dielectric heating than the first polyester yarn.

4. Method according to Claim 3, **characterized in that** the suitability of the second polyester yarn for dielectric heating is improved by a modification of the polyester structure, particularly in the polymer chain, compared with the first polyester yarn.

5. Method according to Claim 4, **characterized in that** the second polyester yarn has polar functional groups for improving the dielectric heating.

6. Method according to any one of Claims 4 and 5, **characterized in that** the second polyester yarn includes monomers for improving the dielectric heating.

7. Method according to any one of Claims 1 to 6, **characterized in that** the at least one further yarn comprises an alternative yarn which is more suitable for dielectric heating than the first polyester yarn.

8. Method according to Claim 7, **characterized in that** the alternative yarn comprises one, several or all of the following fibres: fibres of polyamide, acrylic, particularly polymethyl methacrylate (PMMA) or polyacrylic acid (PAA), polyphenylene sulphide, thermoplastic polyurethane, polyvinyl chloride, ethylene vinyl alcohol, polyvinylidene fluoride, polyimide and/or a copolymer of polyimide.

9. Method according to either of Claims 7 or 8, **characterized in that** the alternative yarn comprises at least one bicomponent fibre.

10. Method according to any one of the preceding claims, **characterized in that** the suitability of the further yarn for dielectric heating is improved by at least one additive, which has greater dielectric properties, particularly stronger dielectricity, than the first polyester yarn.

11. Method according to Claim 10, **characterized in that** the at least one supplementary substance comprises one, several or all of the additives: additives for improving impact resistance, softeners and inorganic fillers, particularly barium titanium oxide, titanium dioxide, alumina, zirconia, carbon black or activated carbon, silicon carbide.

12. Method according to any one of the preceding claims, **characterized in that** the additional yarn is only incorporated into the upper layer.

13. Seat cover (6) produced by a method according to any one of Claims 1 to 9 or 12.

14. Seat, particularly a vehicle seat, with a cushion (7) and a seat cover (6) according to claim 13 at least partially covering the cushion (7).

## Revendications

1. Procédé pour la fabrication d'une housse de siège (6), la housse de siège (6) comportant un rembourrage de housse (8) et un matériau de décoration (9), le rembourrage de housse (8) fournissant une nappe supérieure (10), une couche de rembourrage (12) disposée dessous et une nappe inférieure disposée dessous (11) et la housse de siège (6) comportant un textile d'espacement (1) avec une couche de face avant (2) et une couche de face arrière (3) et une couche d'espacement (5) disposée entre la couche de face avant (2) et la couche de face arrière (3) et maintenant la couche de face avant (2) à distance de la couche de face arrière (3), le textile d'espacement (1) fournissant au moins avec la couche de face avant (2) la nappe supérieure (10) et la couche de rembourrage (12) avec au moins la couche d'espacement (5) et au moins la couche d'espacement (5) et la couche de face arrière (3) comportant un premier fil de polyester,
**caractérisé en ce que**
le matériau de décoration (9) est stratifié par laminage au moyen d'une soudure à haute fréquence dans un champ de hautes fréquences sur le rembourrage de housse (8), dans le champ de hautes fréquences la couche de face avant (2) comportant de ce fait au moins un autre fil, lequel comporte par rapport au premier fil de polyester une meilleure aptitude au chauffage diélectrique dans lequel se crée une chaleur suffisante dans la couche de face avant (2) pour souder le matériau de décoration (9) sur la couche de face avant (2) du textile d'espacement (1).

2. Procédé selon la revendication 1, **caractérisé en ce que** lors du soudage du matériau de décoration (9) une liaison par conformité de matière est établie sur la couche de face avant (2) du textile d'espacement entre la couche de face avant (2) et le matériau de décoration (9).

3. Procédé selon l'une quelconque des revendications 1 à 2, **caractérisé en ce qu'**au moins un autre fil comprend un deuxième fil de polyester, lequel comporte par rapport au premier fil de polyester une meilleure aptitude au chauffage diélectrique.

4. Procédé selon la revendication 3, **caractérisé en ce que** l'aptitude du deuxième fil de polyester au chauffage diélectrique est améliorée par une structure de polyester modifiée par rapport au premier fil de polyester, notamment dans la chaîne polymère.

5. Procédé selon la revendication 4, **caractérisé en ce que** le deuxième fil de polyester comporte des groupes polaires fonctionnels pour améliorer le chauffage diélectrique.

6. Procédé selon l'une quelconque des revendications 4 et 5, **caractérisé en ce que** le deuxième fil de polyester comporte des monomères pour améliorer le chauffage diélectrique.

7. Procédé selon l'une quelconque des revendications 1 à 6, **caractérisé en ce qu'**au moins un autre fil comprend un fil alternatif, lequel comporte une meilleure aptitude au chauffage diélectrique par rapport au premier fil de polyester.

8. Procédé selon la revendication 7, **caractérisé en ce que** le fil alternatif comprend plusieurs ou toutes les fibres suivantes : fibres de polyamide, d'acrylique, notamment de polyméthylméthacrylate (PMMA) ou d'acide polyacrylique (PAA), de sulfure de polyphénylène, de polyuréthane thermoplastique, de chlorure de polyvinyle, d'éthylène-alcool vinylique, de fluorure de polyvinylidène, de polyimide et/ou d'un coplolymère de polyimide.

9. Procédé selon l'une quelconque des revendications 7 et 8, **caractérisé en ce que** le fil alternatif comprend au moins une fibre à deux composants.

10. Procédé selon l'une quelconque des revendications précédentes, **caractérisé en ce que** l'aptitude de l'autre fil au chauffage diélectrique est améliorée par au moins un élément d'addition, notamment au moins un additif, avec des propriétés diélectriques supérieures, notamment une plus grande diélectricité, par rapport au premier fil de polyester.

11. Procédé selon la revendication 10, **caractérisé en ce qu'**au moins un élément d'addition comprend un, plusieurs ou tous les additifs désignés ci-après : additifs pour l'amélioration de la résistance au choc, plastifiants et matières de remplissage minérales, notamment titanate de baryum, dioxyde de titane, oxyde d'aluminium, zirconium, suie ou charbons actifs, carbure de silicium.

12. Procédé selon l'une quelconque des revendications précédentes, **caractérisé en ce que** l'autre fil est exclusivement incorporé dans la couche de face supérieure.

13. Housse de siège (6) selon fabriquée selon un procédé selon l'une quelconque des revendications 1 à 9 ou 12.

14. Siège, notamment siège de véhicule, avec un rembourrage (7) et au moins une housse de siège (6) recouvrant au moins en partie le rembourrage (7) selon la revendication 13.
